Europäisches Patentamt

European Patent Office

Office européen des brevets

(19)

(11) EP 0 759 804 B1

(12) **EUROPÄISCHE PATENTSCHRIFT**

(45) Veröffentlichungstag und Bekanntmachung des
Hinweises auf die Patenterteilung:
**20.02.2002 Patentblatt 2002/08**

(51) Int Cl.[7]: **B01D 61/14**, B01D 61/02

(21) Anmeldenummer: **95917897.1**

(86) Internationale Anmeldenummer:
**PCT/DE95/00624**

(22) Anmeldetag: **11.05.1995**

(87) Internationale Veröffentlichungsnummer:
**WO 95/31274 (23.11.1995 Gazette 1995/50)**

(54) **VORRICHTUNG ZUR TRENNUNG FLÜSSIGER MEDIEN MITTELS MEMBRANEN**

DEVICE FOR SEPARATING FLUID MEDIA BY MEANS OF DIAPHRAGMS

DISPOSITIF PERMETTANT DE SEPARER DES SUBSTANCES LIQUIDES A L'AIDE DE
MEMBRANES

(84) Benannte Vertragsstaaten:
**DE ES FR GB IT NL SE**

(30) Priorität: **18.05.1994 DE 4417308**
**04.03.1995 DE 19507595**

(43) Veröffentlichungstag der Anmeldung:
**05.03.1997 Patentblatt 1997/10**

(73) Patentinhaber: **GKSS-FORSCHUNGSZENTRUM
GEESTHACHT GMBH
21502 Geesthacht (DE)**

(72) Erfinder:
• WEIGEL, Thomas
  **14557 Wilhelmhorst (DE)**
• **ALBRECHT, Wolfgang
  D-14513 Teltow (DE)**
• **PAUL, Dieter
  D-14532 Kleinmachnow (DE)**

(74) Vertreter: **Niedmers, Ole, Dipl.-Phys.
Patentanwalt, Van-der-Smissen-Strasse 3
22767 Hamburg (DE)**

(56) Entgegenhaltungen:
**EP-A- 0 137 877        EP-A- 0 520 920
US-A- 5 102 542**

• **PATENT ABSTRACTS OF JAPAN vol. 2 no. 31
(C-004) ,27.Februar 1978 & JP,A,52 128888
(EBARA INFILCO CO LTD) 28.Oktober 1977,**

## Beschreibung

Die Erfindung betrifft ein Verfahren und eine Vorrichtung zur Trennung flüssiger Medien, insbesondere für medizinische Anwendungen wie die Blutdetoxikation, mittels Membranen.

Eine Vorrichtung dieser Art ist bekannt (US-A-4 498 990).

Allgemein gilt, daß mit Filterelementen Fraktionierungen und/oder Aufkonzentrierungen von Inhaltsstoffen flüssiger Medien derart vorgenommen werden, daß die Filterelemente mit unterschiedlich trennenden Membranen mit entsprechend abnehmendem mittleren Porenradius derart kaskadenartig zusammengeschaltet werden, daß das Permeat des ersten Trennelementes über Pumpen dem Innenraum oder Außenraum des zweiten Filterelementes zugeführt werden und das Permeat des zweiten Filterelements dem Retentat des ersten Filterelements nach Verlassen desselben zugeführt oder - da arm an Inhaltsstoffen - verworfen wird. Die abzutrennenden bzw. zu konzentrierenden Inhaltsstoffe befinden sich im Retentat, das das zweite Filterelement verläßt.

Alle bisherigen Kombinationen von Filterelementen haben den gemeinsamen Nachteil, daß sie nicht selbstregelnd sind, d.h., daß Fraktionierungen und/oder Aufkonzentrierungen von Inhaltsstoffen flüssiger Medien nur über eine geeignete äußere Volumen- und/oder Drucksteuerung möglich sind, die derartige Prozesse stark komplizieren und unsicher gestalten.

Die eingangs genannte bekannte US-A-4 498 990 weist zwar zwei hintereinandergeschaltete Filterelemente auf, die in einem gemeinsamen Raum angeordnet sind, sie weist jedoch eine gemeinsame offene Permeatabführung auf, wobei zwischen dem Flüssigkeitseingang des ersten Filterelements und dem Retentatausgang des zweiten Filterelements ein drucksensitives Ventil geschaltet ist, um im Fall einer zu hohen Druckdifferenz zwischen Flüssigkeitseingang des ersten Filterelementes und dem Retentatausgang des zweiten Filterelementes einen Bypass zu öffnen, der als direkte Verbindung einen Druckausgleich ermöglicht. Bei einem zu großen Überdruck, der seine Ursache in einem oder beiden der Filterelemente hat, öffnet das Ventil, was zwar zu einem Druckausgleich führt, aber die Ursache des Druckanstiegs nicht beseitigt. Im Falle der Bypassöffnung findet somit kein Filtrationsvorgang mehr statt, d.h., die Filterelemente müssen erst anderweitig freigespült werden, um die Ursache für den Druckanstieg zu beseitigen und die Vorrichtung erneut nutzen zu können. Im Falle von Blut als zu trennendem und/oder zu konzentrierendem fluiden Medium ist dieses nur durch Ersatz der eigentlichen Filterelemente behebbar.

Es ist somit Aufgabe der vorliegenden Erfindung, ein Verfahren und eine Vorrichtung zu schaffen, mittels denen der Permeat- und Filtratfluß sich selbständig regelt, ohne daß äußere Maßnahmen, wie Ventile, Drucksteuerungseinrichtungen und dergl., wie sie im bisherigen Stand der Technik bekannt sind und verwendet wurden, benötigt werden, wobei die erfindungsgemäße Vorrichtung einfach im Aufbau und sicher im Betrieb sein soll und die vielfältigsten Trennaufgaben insbesondere in Bereich der Ultra- und Mikrofiltration auf einfache Weise realisiert werden können.

Gelöst wird die Aufgabe gemäß der Erfindung durch ein Verfahren zur Trennung flüssiger Medien, insbesondere für medizinische Anwendungen wie die Blutdetoxikation, wobei das zu trennende Medium nacheinander an die jeweils erste Seite zweier unterschiedlich trennender Membranen geleitet wird, und wobei die zweiten Seiten der beiden Membranen einen gemeinsamen, mit flüssigem Trägermedium gefüllten Raum begrenzen und der gemeinsame Raum während des Trennvorganges bei der einen Lösung geschlossen ist und bei der anderen Lösung geöffnet ist und daß die Strömungskanäle in den jeweils ersten Seiten der Membranen so bemessen sind, daß die mittleren Strömungsgeschwindigkeiten $v_1$ des zu trennenden Mediums an der ersten Seite der ersten Membran < der Strömungsgeschwindigkeit $v_2$ des zu trennenden Mediums an der ersten Seite der zweiten Membran ist.

Der Trennvorgang mittels der Vorrichtung wird regelmäßig bei geschlossenem Raum, den die zweiten Seiten der Membranen begrenzen, oder, bei als Hohlfadenmembranen ausgebildeten Membranen, in denen das erste und das zweite Filterelement angeordnet sind, durchgeführt. Unter Raum wird hier der Raum verstanden, dem während des Trenn- bzw. Filtrationsvorganges definierte Volumina Flüssigkeit zugeführt werden, d.h. hier wird eine definierte Verdünnung der Rohflüssigkeit erreicht, bzw. ein Raum, dem während des Trenn- bzw. Filtrationsvorganges definierte Volumina Flüssigkeit entzogen werden, d.h. hier wird ein Konzentrat an Inhaltsstoffen der Rohflüssigkeit gewonnen.

Bei bestimmten Trennvorgängen kann es auch wünschenswert sein, bei Erreichen eines gewünschten Aufkonzentrierungsgrades den Raum zeitweise oder auch kontinuierlich so zu öffnen, daß auch in diesem Zustand die lösungsgemäße Bedingung realisiert bleibt. Aus diesem Grunde ist es schließlich vorteilhaft, den Raum während des Trennvorganges wahlweise so auszugestalten, daß er zu öffnen ist.

Gelöst wird die Aufgabe gemäß der Erfindung durch eine Vorrichtung zur Trennung flüssiger Medien, insbesondere für medizinische Anwendungen wie bei der Blutdetoxikation, mit der die vorbeschriebenen Verfahren ausgeführt werden können, wobei das zu trennende Medium nacheinander an die jeweils erste Seite zweier unterschiedlich trennender Membranen geleitet wird, und wobei die zweiten Seiten der beiden Membranen einen gemeinsamen, mit flüssigem Trägermedium gefüllten Raum begrenzen und die Strömungskanäle an den jeweils ersten Seiten der Membranen so bemessen sind, daß die mittlere Strömungsgeschwindigkeit $v_1$ des zu trennenden Mediums an der ersten Seite der ersten

Membran < der Strömungsgeschwindigkeit $v_2$ des zu trennenden Mediums an der ersten Seite der zweiten Membran ist.

Der wesentliche Vorteil der Erfindung liegt darin, daß unter den vorangehend dargelegten Konstruktions- und Filtrationsbedingungen aus dem zu trennenden Medium Permeat durch die Membranwand der ersten Membran in den mit einem flüssigen Trägermedium angefüllten Raum, der durch die Membranen getrennt bzw. begrenzt wird, eintritt, und Filtrat mit - entsprechend der Trennwirkung der zweiten Membran veränderter Zusammensetzung an Inhaltsstoffen - vom gemeinsamen Raum durch die Membranwand der zweiten Membran in den mit dem zu trennenden Medium durchströmten Raum der ersten Seite der zweiten Membran zurückströmt, so daß sich Inhaltsstoffe des zu trennenden bzw. zu fraktionierenden und/oder zu konzentrierenden flüssigen Mediums unter Verarmung des zu bearbeitenden flüssigen Mediums im gemeinsamen Raum (Filtratraum) anreichern, wobei im gemeinsamen Raum ein Konzentrat an abzutrennenden bzw. zu fraktionierenden und/oder zu konzentrierenden Inhaltsstoffen entsteht.

Unter Permeat soll hier ein flüssiges Medium verstanden werden, das von der ersten Seite der ersten Membran in den gemeinsamen Raum (Filtratraum) übertritt, während als Filtrat ein flüssiges Medium bezeichnet wird, das aus dem Raum, der durch die zweiten Seiten der beiden Membranen begrenzt wird, in den Raum zurückpermeiert, der durch die erste Seite der zweiten Membran begrenzt wird.

Aufgrund des normalerweise geschlossenen, mit einem flüssigen Trägermedium gefüllten, gemeinsamen Raumes tritt über die erste Membran nur soviel Permeat in den gemeinsamen Raum ein, wie Filtrat aus dem gemeinsamen Raum über die Membranwand der zweiten Membran in den vom zu trennenden Medium durchströmten Raum an der ersten Seite der zweiten Membran zurückpermeieren kann.

Vermindert sich aufgrund der Druckverhältnisse zwischen dem an der ersten Seite der ersten Membran strömenden flüssigen Medium und dem gemeinsamen Raum der Permeatfluß über die erste Membran, so erhöht sich die Strömungsgeschwindigkeit des an der ersten Seite der zweiten Membran längsströmenden fluiden Mediums, was zu einer vergrößerten Druckdifferenz zwischen dem gemeinsamen Raum und der erste Seite der zweiten Membran führt, in dessen Folge eine erhöhte Permeation von Filtrat aus dem gemeinsamen Raum zum durchströmten Raum an der ersten Seite der zweiten Membran resultiert, was wiederum zu einem erhöhtem Permeatfluß vom durchströmten Raum an der ersten Seite der Membran in den gemeinsamen Raum an den zweiten Seiten der Membranen führt. Die Vorrichtung ist somit entsprechend der vorgenannten Aufgabe ohne äußere Regelelemente selbstregelnd.

Grundsätzlich können neben Flachmembranen alle anderen geeigneten Membrantypen bei der erfindungsgemäßen Vorrichtung Anwendung finden. Vorteilhaft, weil einfach und kostengünstig her- und bereitstellbar, ist es, die Membranen als Hohlfadenmembranen auszubilden und das zu trennende Medium nacheinander durch die Innenräume der Hohlfadenmembranen eines ersten Filterelements und dann eines zweiten Filterelements, die sich beide in dem geschlossenen Raum befinden, zu leiten, wobei die ersten Seiten der Hohlfadenmembranen durch deren innere Oberflächen und die zweiten Seiten der Hohlfadenmembranen durch deren äußere Oberflächen gebildet werden.

Je nach zu trennendem bzw. fraktionierendem und/oder zu konzentrierendem flüssigen Medium erfolgt die Auswahl von symmetrisch oder asymmetrisch strukturierten ersten und zweiten Membran entsprechend der für die jeweilige Separation notwendigen Trennwirkung. Vorteilhafterweise wird dabei der mittlere Porendurchmesser der ersten Membran $\geq$ dem mittlerem Porendurchmesser der zweiten Membran gewählt.

Dabei ist es vorteilhaft, daß der mittlere Porendurchmesser der ersten Membran im Bereich vom 0,05 bis 1 $\mu$m liegt, wobei dabei vorzugsweise der mittlere Porendurchmesser im Bereich von 0,1 bis 1 $\mu$m liegt.

Bei einer anderen vorteilhaften Ausgestaltung der Vorrichtung liegt der mittlere Porendurchmesser der zweiten Membran im Bereich von 0,005 bis 0,5 $\mu$m, wobei dabei vorzugsweise der Porendurchmesser im Bereich 0,01 bis 0,1 $\mu$m liegt.

Grundsätzlich können, wie schon erwähnt, symmetrisch aufgebaute Membranen die ersten und/oder zweiten Membranen bilden. Es hat sich jedoch als vorteilhaft herausgestellt, die erste Membran mit einer asymmetrischen Struktur mit auf der inneren Oberfläche befindlicher trennaktiver Schicht aufzubauen, wobei für den Fall, daß die zweite Membran vorzugsweise auch eine asymmetrische Struktur aufweist, diese jedoch eine trennaktive Schicht vorzugsweise auf der Oberfläche der zweiten Seite besitzt.

Insbesondere dann, wenn die Membranen als Hohlfadenmembranen ausgebildet sind, sind mit der Zahl und mit dem Innendurchmesser der Hohlfadenmembranen im ersten und im zweiten Filterelement Kenngrößen gegeben, mit denen das Verhältnis der Strömungsgeschwindigkeit in den Innenräumen der Hohlfadenmembranen der Vorrichtung variert werden kann und zwar entsprechend der lösungsgemäß vorgeschlagenen Relation.

Dabei ist es vorteilhaft, den Innendurchmesser der Hohlfadenmembranen des ersten Filterelements im Bereich von 200 bis 1500 $\mu$m vorzusehen, vorzugsweise im Bereich 300 bis 600 $\mu$m, wobei es ebenfalls vorteilhaft ist, den Innendurchmesser der Hohlfadenmembranen des zweiten Filterelements im Bereich von 150 bis 500 $\mu$m vorzusehen, vorzugsweise im Bereich von 220 bis 300 $\mu$m.

Für optimale Trennergebnisse ist es zudem vorteilhaft, die Austauschfläche der Hohlfadenmembranen des ersten Filterelements im Bereich von 0,01 bis 10 m² vorzusehen, vorzugsweise im Bereich von 0,1 bis 5 m².

Vorteilhafterweise ist die austauschrelevante Länge der Hohlfadenmembranen des ersten Filterelements im Bereich von 5 bis 100 cm gewählt, vorzugsweise im Bereich von 10 bis 30 cm.

Vorteilhafterweise ist die Austauschfläche der Hohlfadenmembranen des zweiten Filterelements im Bereich von 0,1 bis 100 m² gewählt, vorzugsweise im Bereich von 0,5 bis 20 m².

Dabei ist vorzugsweise die austauschrelevante Länge der Hohlfadenmembranen des zweiten Filterelements im Bereich von 20 bis 100 cm gewählt, vorzugsweise im Bereich von 20 bis 50 cm.

Die Erfindung wird nun unter Bezugnahme auf die nachfolgenden schematischen Zeichnungen anhand eines Ausführungsbeispieles mit als Hohlfadenmembranen ausgebildeten Membranen im einzelnen beschrieben. Darin zeigen:

Fig. 1 eine Vorrichtung, bestehend aus zwei seriell verbundenen, Hohlfadenmembranen aufweisenden Filterelementen, wobei der Raum (Filtratraum) des ersten und des zweiten Filterelements über eine gesonderte Leitung miteinander verbunden sind, und

Fig. 2 in stark schematisierter Form in einem teilweisen Ausschnitt im Schnitt jeweils eine Hohlfadenmembran des ersten und des zweiten Filterelements in prinzipiell seriell aneinandergekoppelter Anordnung zur Erläuterung des Trennprinzips der Vorrichtung.

Die Vorrichtung 10 besteht im wesentlichen aus einem ersten Filterelement 11 und einem zweiten Filterelement 12, die hintereinandergeschaltet sind, was noch im einzelnen weiter unten beschrieben wird. Prinzipiell können beide Filterelemente 11, 12 einen grundsätzlich gleichen Aufbau aufweisen, wobei aber unterschiedliche konstruktive Ausgestaltungen möglich sind. Beide Filterelemente 11, 12 umfassen als eigentliche Trennelemente Hohlfadenmembranen 15, 17, die auf an sich bekannte Weise an ihren jeweiligen Enden 110, 111 sowie 120, 121 in einem Gießharz oder dergleichen eingegossen und dadurch mechanisch miteinander und mit einer äußeren Begrenzung 113 bzw. 123 verbunden sind. Die Hohlfadenmembranen 15, 17 sind aber am äußeren Ende 110, 111 sowie 120, 121 offen, so daß deren Innenräume 16, 18 vom zu trennenden Medium 14 durchflossen werden können.

Obwohl in den Figuren im einzelnen nicht dargestellt, sind die Hohlfadenmembranen 15, 17 an ihrem einen Ende 110, 121 jeweils mit einem Einlaß 112 und einem Auslaß 122 versehen, und zwar derart, daß über den Einlaß 112 das zu trennende Medium 14 die Innenräume 16 der Hohlfadenmembranen durchströmen kann und dort am anderen Ende 111 austreten kann, in einen Zwischenraum 27 gelangen kann und von dort wiederum über das Ende 120 des zweiten Filterelements 12 in die Innenräume 18 der Hohlfadenmembranen 17 eintreten kann, die Hohlfadenmembranen 17 durchströmen kann und dann am Auslaß 122 des zweiten Filterelements 12 austreten kann.

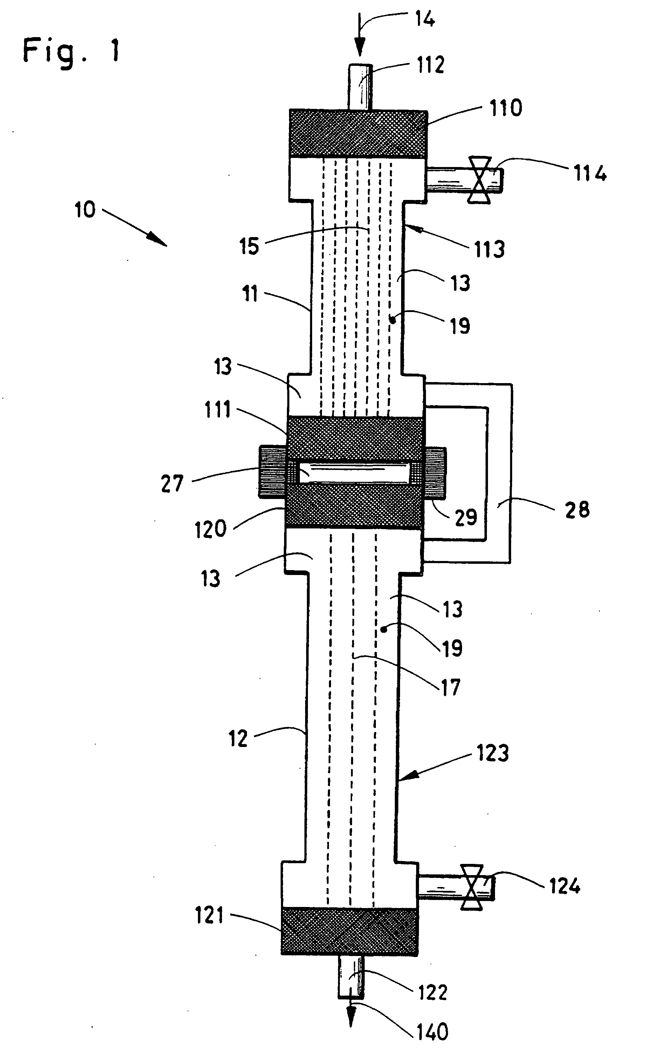

Die in Fig. 1 dargestellten Filterelemente 11, 12 sind schematisierte Darstellungen von Filterelementen, die zur Realisierung der Vorrichtung 10 aufgrund vorhandener Filterelemente benutzt wurden. Es sei darauf hingewiesen, daß die Filterelemente 11, 12 nicht zwingend den in Fig. 1 dargestellten schematischen Aufbau aufweisen müssen, um die Vorrichtung 10 zu realisieren. Bei der Realisierung der Vorrichtung mit den dargestellten Filterelementen 11, 12 wird der Raum 13, in dem beide Filterelemente 11, 12 angeordnet sind, durch die äußere Begrenzung 113 bzw. 123 nach außen druckdicht abgeschlossen. Um das Erfordernis zu erfüllen, daß beide Filterelemente 11, 12 in einem gemeinsamen Raum 13 angeordnet sind, ist der Raum 13 des ersten Filterelements 11 mit dem Raum 13 des zweiten Filterelements 12 über eine Leitung 28 auf geeignete Weise verbunden, so daß quasi ein gemeinsamer Raum 13 entsteht, in dem beide Filterelemente 11, 12 angeordnet sind.

Der Zwischenraum 27 ist nach außen druckdicht abgeschlossen, und zwar mittels geeigneter Dichtungs- bzw. Verbindungsmittel 29, und zwar in der Art, daß die Lumenquerschnittsflächen, d.h. die Stirnflächen der Hohlfadenmembranen 15, 17, mit ihren Öffnungen nicht beeinträchtigt werden, d.h. ein Durchströmen des zu trennenden Mediums 14 durch beide Hohlfadenmembranen 15, 17 ungehindert möglich ist.

Bei Inbetriebnahme der Vorrichtung 10 muß der Raum 13 in geeigneter, an sich bekannter Weise mit einem flüssigen Trägermedium gefüllt werden. Dieses kann beispielsweise über den verschließbaren Einfüllstutzen 114 des ersten Filterelements 11 geschehen. Das flüssige Trägermedium 19, das den Raum 13 füllt, ist bei üblichen Trenn- bzw. Fraktionier- und/oder Konzentrierungsprozessen das zu trennende Medium 14 selbst, das (auch) durch die Innenräume 16, 18 der Hohlfadenmembranen 15, 17 strömt, oder ein Bestandteil desselben. Bei medizinischen Anwendungen der Vorrichtung 10, beispielsweise auf dem Gebiet der Blutdetoxikation, verwendet man als flüssiges Trägermedium 19 bevorzugt eine physiologische Kochsalzlösung, Trägerflüssigkeiten ähnlicher Zusammensetzung bzw. Funktion oder Bestandteile des Blutes, z.B. Plasma.

Nachdem der Raum 13 mit dem flüssigen Trägermedium 19 gefüllt ist, wird das zu trennende Medium 14 über den Einlaß 112 im oben beschriebenen Sinne durch die beiden hintereinandergeschalteten Filterelemente 11, 12 geleitet. Durch geeignete Dimensionierung der Anzahl und Größe der Hohlfadenmembranen 15, 17 in beiden Filterelementen 11, 12 wird sichergestellt, daß die mittlere Strömungsgeschwindigkeit $v_1$ des zu trennenden Mediums 14 im Innenraum 16 der Hohlfadenmembranen 15 des ersten Filterelements 11 < der Strömungsgeschwindigkeit $v_2$ des zu trennenden Mediums 14 im Innenraum 18 der Hohlfadenmembran 17 des zweiten Filterelements 12 ist.

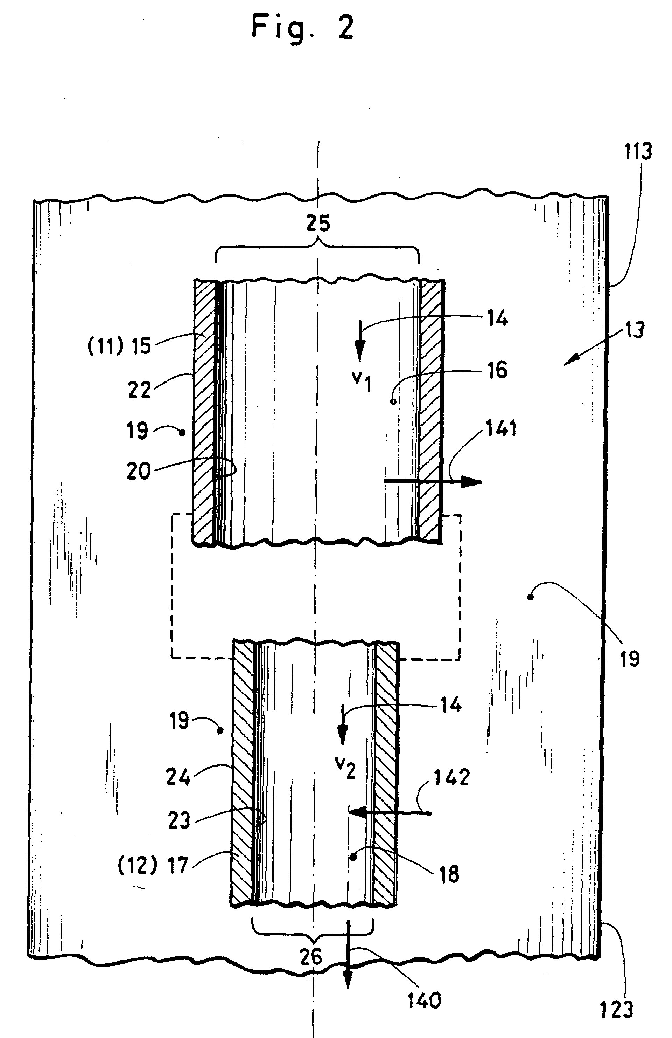

Bei Einhaltung dieser Relation tritt Permeat 141, vergleiche Fig. 2, durch die Membranwand der Hohlfadenmembranen 15 des ersten Filterelements aus und in den gemeinsamen Raum 13 ein. Dementsprechend tritt entsprechend der Trennwirkung der Hohlfadenmembranen 17 des zweiten Filterelements 12 Filtrat mit veränderter Zusammensetzung an Inhaltsstoffen vom gemeinsamen Raum 13 durch die Membranwand der Hohlfadenmembranen 17 des zweiten Filterelements 12 in die vom zu trennenden Medium 14 durchflossenen Innenräume 18 der Hohlfadenmembranen 17 des zweiten Filterelements 12 ein. Demzufolge reichern sich Inhaltsstoffe des zu trennenden bzw. zu fraktionierenden und/oder zu konzentrierenden flüssigen Mediums 14 im gemeinsamen Raum 13 an, wobei im gemeinsamen Raum 13 ein Konzentrat an abzutrennenden bzw. zu fraktionierenden und/oder zu konzentrierenden Inhaltsstoffen entsteht.

Bei der bestimmungsgemäßen Funktion der Vorrichtung 10 tritt aus dem ersten Filterelement 11 nur so viel Permeat 141 in den gemeinsamen Raum 13 ein, wie Filtrat 142 aus dem gemeinsamen Raum 13 über die Membranwand der Hohlfadenmembranen 17 des zweiten Filterelements 12 in den durchströmten Innenraum 18 der Hohlfadenmembranen 17 zurückpermeieren kann. Vermindert sich aufgrund der Druckverhältnisse zwischen dem die Hohlfadenmembranen 15 des ersten Filterelements durchströmenden Medium 14 und dem gemeinsamen Raum 13 der Permeatfluß des ersten Filterelements 11, so erhöht sich, bedingt durch den erfindungsgemäßen Aufbau der Vorrichtung 10, insbesondere die Strömungsgeschwindigkeit des den Innenraum 18 der Hohlfadenmembranen 17 des zweiten Filterelements 12 durchströmendenden Mediums 14, was zu einer vergrößerten Druckdifferenz zwischen dem gemeinsamen Raum und dem Innenraum 18 der Hohlfadenmembranen 17 des zweiten Filterelements 12 führt, dessen Folge eine erhöhte Permeation von Filtrat 142 aus dem gemeinsamen Raum 13 in den durchströmten Inneraum der Hohlfadenmembranen 17 des zweiten Filterelements 12 ist, was wiederum zu einem erhöhten Permeatfluß von durchströmtem Innenraum 16 der Hohlfadenmembranen 15 des ersten Filterelements 11 in den gemeinsamen Raum 13 führt. Die Vorrichtung 10 ist somit der Zielsetzung entsprechend ohne äußere Regelelemente selbstregelnd.

Wie erwähnt, muß sichergestellt sein, daß die mittlere Strömungsgeschwindigkeit $v_1$ des zu trennenden Mediums 14 im Innenraum 16 der Hohlfadenmembranen 15 des ersten Filterelements 11 < der Strömungsgeschwindigkeit $v_2$ des zu trennenden Mediums 14 im Innenraum 18 der Hohlfadenmembranen 17 des zweiten Filterelementes 12 ist. Unter Vernachlässigung der Anteile von Druckverlusten und eines Volumenverlustes/-zuwachses in den Filterelementen 11, 12 ist diese Forderung verwirklicht, wenn die Bedingung der Gleichung

$$\frac{1}{n_1 * d_1^2} < \frac{1}{n_2 * d_2^2}$$

mit

$n_1$ = Hohlfadenmembranzahl im ersten Filterelement

$n_2$ = Hohlfadenmembranzahl im zweiten Filterelement

$d_1$ = Innendurchmesser der Hohlfadenmembranen des ersten Filterelementes

$d_2$ = Innendurchmesser der Hohlfadenmembranen des zweiten Filterelementes

eingehalten werden. Mit der Zahl und dem Innendurchmesser 25, 26 der Hohlfadenmembranen 15, 17 in den Filterelementen 11, 12 sind Kenngrößen gegeben, mittels derer das Verhältnis der Strömungsgeschwindigkeiten in den Innenräumen 16, 18 der Hohlfadenmembranen 15, 17 der Vorrichtung 10 unter ansonsten identischen Bedingungen im starken Maße variiert und somit die Forderung der lösungsgemäßen Relation realisiert werden kann.

Normalerweise ist der Raum während des Trenn- bzw. Fraktionier- und/oder Konzentrationsprozesses geschlossen. Nach Erreichen des gewünschten Aufkonzentrierungsgrades kann der Raum 13 zeitweise oder kontinuierlich so geöffnet werden, daß auch in diesem Zustand die Bedingung, daß die Strömungsgeschwindigkeit $v_1$ des zu trennenden Mediums 14 im Innenraum 16 der Hohlfadenmembranen 15 des ersten Filterelements < der Strömungsgeschwindigkeit $v_2$ des zu trennenden Innenmediums im Innenraum der Hohlfadenmembranen des zweiten Filterelements 12 ist, realisi ert bleibt. Die Entnahme von Konzentrat aus dem Raum 13 hat daher so zu erfolgen, daß die Relation

$$\frac{\dot{V} - \dot{V}k}{n_1 * d_1^2} < \frac{\dot{V}}{n_2 * d_2^2}$$

mit

$\dot{V}$ = mittlerer Volumenstrom der das Innenkompartmente durchströmenden Flüssigkeit

$\dot{V}_k$ = mittlerer Volumenstrom des Konzentrats $n_1$, $d_1$, $n_2$, $d_2$ - wie oben beschrieben

erfüllt wird. Bei kontinuierlicher Entnahme erfolgt dieses vorzugsweise durch Öffnen des Auslaßstutzens 124 des zweiten Filterelements 12 unter Verschluß des Einfüllstutzens 114 des ersten Filterelements 11.

Deshalb ist es erfindungsgemäß auch möglich, daß der Raum 13 während des Trennvorganges für eine diskontinuierliche oder kontinuierliche Konzentratabführung so geöffnet ist, daß auch in diesem Zustand die Bedingung realisiert bleibt, daß die Strömungsgeschwindigkeit $v_1$ des zu trennenden Mediums 14 im Innenraum 16 der Hohlmembranen 15 des ersten Filterelementes 11 < der Strömungsgeschwindigkeit $v_2$ des zu trennenden Innenmediums 14 im Innenraum 18 der Hohlfadenmembranen 17 des zweiten Filterelementes 12 ist.

Schließlich ist es grundsätzlich auch möglich, den gemeinsamen Raum 13 speziell bei der Trennung komplexer Inhaltsstoffe im zu trennenden Medium 14 neben dem flüssigen Trägermedium 19 zusätzlich teilweise oder vollständig mit einem Sorbens für die zu trennenden bzw. zu fraktionierenden und/oder zu konzentrierenden Inhaltsstoffe zu füllen, um in an sich bekannter Weise den Trennvorgang zu unterstützen.

Bezugszeichenliste

| | |
|---|---|
| 10 | Vorrichtung |
| 11 | Filterelement (erstes) |
| 110 | Ende |
| 111 | Ende |
| 112 | Einlaß |
| 113 | Begrenzungswand |
| 114 | Einfüllstutzen |
| 12 | Filterelement (zweites) |
| 120 | Ende |
| 121 | Ende |
| 122 | Auslaß |
| 123 | Begrenzungswand |
| 124 | Ausl aßstutzen |
| 13 | Raum |
| 14 | zu trennendes Medium |
| 141 | Permeat |
| 142 | Filtrat |
| 15 | Hohlfadenmembran (erstes Filterelement) |
| 16 | Innenraum (Hohlfadenmembran erstes Filterelement) |
| 17 | Hohlfadenmembran (zweites Filterelement) |
| 18 | Innenraum (Hohlfadenmembran zweites Filterelement) |
| 19 | flüssiges Trägermedium |
| 20 | innere Oberfläche (Hohlfadenmembran erstes Filterelement) |
| 22 | äußere Oberfläche (Hohlfadenmembran erstes Filterelement) |
| 23 | innere Oberfläche (Hohlfadenmembran zweites Filterelement) |
| 24 | äußere Oberfläche (Hohlfadenmembran zweites Filterelement) |
| 25 | Innendurchmesser (Hohlfadenmembran erstes Filterelement |
| 26 | Innendurchmesser (Hohlfadenmembran zweites Filterelement) |
| 27 | Zwischenraum |
| 28 | Leitung |
| 29 | Dichtungs-/Verbindungsmittel |

**Patentansprüche**

1. Verfahren zur Trennung flüssiger Medien, insbesondere für medizinische Anwendungen wie die Blutdetoxikation, wobei das zu trennende Medium (14) nacheinander an die jeweils erste Seite zweier unterschiedlich trennender Membranen (15, 17) geleitet wird, und wobei die zweiten Seiten der beiden Membranen (15, 17) einen gemeinsamen, mit flüssigem Trägermedium (19) gefüllten Raum (13) begrenzen und der gemeinsame Raum (13) während des Trennvorgangs geschlossen ist und daß die Strömungskanäle an den jeweils ersten Seiten der Membranen (15, 17) so bemessen sind, daß die mittlere Strömungsgeschwindigkeit $v_1$ des zu trennenden Mediums (14) an der ersten Seite der ersten Membran (15) < der Strömungsgeschwindigkeit $v_2$ des zu trennenden Mediums (14) an der ersten Seite der zweiten Membran (17) ist.

2. Verfahren zur Trennung flüssiger Medien, insbesondere für medizinische Anwendungen wie die Blutdetoxikation, wobei das zu trennende Medium (14) nacheinander an die jeweils erste Seite zweier unterschiedlich trennender Membranen (15, 17) geleitet wird, und wobei die zweiten Seiten der beiden Membranen (15, 17) einen gemeinsamen, mit flüssigem Trägermedium (19) gefüllten Raum (13) begrenzen und der gemeinsame Raum (13) während des Trennvorgangs geöffnet ist und daß die Strömungskanäle an den jeweils ersten Seiten der Membranen (15, 17) so bemessen sind, daß die mittlere Strömungsgeschwindigkeit $v_1$ des zu trennenden Mediums (14) an der ersten Seite der ersten Membran (15) < der Strömungsgeschwindigkeit $v_2$ des zu trennenden Mediums (14) an der ersten Seite der zweiten Membran (17) ist.

3. Vorrichtung zur Trennung flüssiger Medien, insbesondere für medizinische Anwendungen wie die Blutdetoxikation, zur Ausführung des Verfahrens nach Anspruch 1 oder 2, wobei das zu trennende Medium (14) nacheinander an die jeweils erste Seite zweier unterschiedlich trennender Membranen (15, 17) geleitet wird, und wobei die zweiten Seiten der beiden Membranen (15, 17) einen gemeinsamen, mit flüssigem Trägermedium (19) gefüllten Raum (13) begrenzen, und daß die Strömungskanäle an den jeweils ersten Seiten der Membranen (15, 17) so bemessen sind, daß die mittlere Strömungsgeschwindigkeit $v_1$ des zu trennenden Mediums (14) an der ersten Seite der ersten Membran (15) < der Strömungsgeschwindigkeit $v_2$ des zu

trennenden Mediums (14) an der ersten Seite der zweiten Membran (17) ist.

4.  Vorrichtung nach Anspruch 3, **dadurch gekennzeichnet, daß** die Membranen Hohlfadenmembranen (15, 17) sind, daß das zu trennende Medium (14) nacheinander durch die Innenräume (16, 18) der Hohlfadenmembranen (15, 17) eines ersten Filterelements (11) und dann eines zweiten Filterelements (12), die sich beide in dem gemeinsamen, geschlossenen Raum (13) befinden, geleitet wird, und daß die ersten Seiten der Hohlfadenmembranen (15, 17) durch deren innere Oberflächen (20, 23) und die zweiten Seiten der Hohlfadenmembranen (15, 17) durch deren äußere Oberflächen (22, 24) gebildet werden.

5.  Vorrichtung nach einem der Ansprüche 3 oder 4, **dadurch gekennzeichnet, daß** der mittlere Porendurchmesser der ersten Membran (15) ≥ dem mittleren Porendurchmesser der zweiten Membran (17) des zweiten Filterelements (12) ist.

6.  Vorrichtung nach einem oder mehreren der Ansprüche 3 bis 5, **dadurch gekennzeichnet, daß** der mittlere Porendurchmesser der ersten Membran (15) im Bereich von 0,05 bis 1 μm liegt.

7.  Vorrichtung nach Anspruch 6, **dadurch gekennzeichnet, daß** der mittlere Porendurchmesser der ersten Membran (15) im Bereich von 0,1 bis 1 μm liegt.

8.  Vorrichtung nach einem oder mehreren der Ansprüche 3 bis 7, **dadurch gekennzeichnet, daß** der mittlere Porendurchmesser der zweiten Membran (17) im Bereich von 0,005 bis 0,5 μm liegt.

9.  Vorrichtung nach Anspruch 8, **dadurch gekennzeichnet, daß** der mittlere Porendurchmesser der zweiten Membran (17) im Bereich vom 0,01 bis 0,1 μm liegt.

10.  Vorrichtung nach einem oder mehreren der Ansprüche 3 bis 9, **dadurch gekennzeichnet, daß** die erste Membran (15) eine asymmetrische Struktur mit auf der inneren Oberfläche (20) befindlicher trennaktiver Schicht aufweist.

11.  Vorrichtung nach einem oder mehreren der Ansprüche 3 bis 10, **dadurch gekennzeichnet, daß** die zweite Membran (17) eine asymmetrische Struktur mit auf der äußeren Oberfläche (24) befindlicher trennaktiver Schicht aufweist.

12.  Vorrichtung nach einem oder mehreren der Ansprüche 4 bis 11, **dadurch gekennzeichnet, daß** der Innendurchmesser (25) der Hohlfadenmembranen (15) des ersten Filterelements (11) im Bereich von 200 bis 1500 μm liegt.

13.  Vorrichtung nach Anspruch 12, **dadurch gekennzeichnet, daß** der Innendurchmesser (25) der ersten Hohlfadenmembranen (15) im Bereich von 300 bis 600 μm liegt.

14.  Vorrichtung nach einem oder mehreren der Ansprüche 4 bis 13, **dadurch gekennzeichnet, daß** der Innendurchmesser (26) der Hohlfadenmembranen (17) des zweiten Filterelements (12) im Bereich von 150 bis 500 μm liegt.

15.  Vorrichtung nach Anspruch 14, **dadurch gekennzeichnet, daß** der Innendurchmesser (26) der zweiten Hohlfadenmembranen (17) im Bereich von 220 bis 300 μm liegt.

16.  Vorrichtung nach einem oder mehreren der Ansprüche 4 bis 15, **dadurch gekennzeichnet, daß** die Austauschfläche der Hohlfadenmembranen (15) des ersten Filterelements (11) im Bereich von 0,01 bis 10 m$^2$ liegt.

17.  Vorrichtung nach Anspruch 16, **dadurch gekennzeichnet, daß** die Austauschfläche der Hohlfadenmembranen (15) des ersten Filterelements (11) im Bereich von 0,1 bis 5 m$^2$ liegt.

18.  Vorrichtung nach einem oder mehreren der Ansprüche 4 bis 17, **dadurch gekennzeichnet, daß** die austauschrelevante Länge der Hohlfadenmembranen (15) des ersten Filterelements (11) im Bereich von 5 bis 100 cm liegt.

19.  Vorrichtung nach Anspruch 16, **dadurch gekennzeichnet, daß** die austauschrelevante Länge der Hohlfadenmembranen (15) des ersten Filterelements (11) im Bereich von 10 bis 30 cm liegt.

20.  Vorrichtung nach einem oder mehreren der Ansprüche 4 bis 19, **dadurch gekennzeichnet, daß** die Austauschfläche der Hohlfadenmembranen (17) des zweiten Filterelements (12) im Bereich von 0,1 bis 100 m$^2$ liegt.

21.  Vorrichtung nach Anspruch 20, **dadurch gekennzeichnet, daß** die Austauschfläche der Hohlfadenmembranen (17) des zweiten Filterelements (12) im Bereich von 0,5 bis 20 m$^2$ liegt.

22.  Vorrichtung nach einem oder mehreren der Ansprüche 4 bis 21, **dadurch gekennzeichnet, daß** die austauschrelevante Länge der Hohlfadenmembranen (17) des zweiten Filterelements (12) im Bereich von 20 bis 100 cm liegt.

**23.** Vorrichtung nach Anspruch 22, **dadurch gekennzeichnet, daß** die austauschrelevante Länge der Hohlfadenmembranen (17) des zweiten Filterelements (12) im Bereich von 20 bis 50 cm liegt.

**Claims**

**1.** Process for the separation of liquid media, in particular for medical applications, such as detoxification of blood, wherein the medium to be separated (14) is passed successively to in each case the first side of two membranes (15, 17) with different separation properties, and wherein the second sides of the two membranes (15, 17) border a common space (13) filled with liquid carrier medium (19) and the common space (13) is closed during the separation operation, and wherein the flow channels on in each case the first sides of the membranes (15, 17) have dimensions such that the average flow rate $v_1$ of the medium to be separated (14) on the first side of the first membrane (15) is < the flow rate $v_2$ of the medium to be separated (14) on the first side of the second membrane (17).

**2.** Process for the separation of liquid media, in particular for medical applications, such as detoxification of blood, wherein the medium to be separated (14) is passed successively to in each case the first side of two membranes (15, 17) with different separation properties, and wherein the second sides of the two membranes (15, 17) border a common space (13) filled with liquid carrier medium (19) and the common space (13) is open during the separation operation, and wherein the flow channels on in each case the first sides of the membranes (15, 17) have dimensions such that the average flow rate $v_1$ of the medium to be separated (14) on the first side of the first membrane (15) is < the flow rate $v_2$ of the medium to be separated (14) on the first side of the second membrane (17).

**3.** Device for the separation of liquid media, in particular for medical applications, such as detoxification of blood, for carrying out the process according to claim 1 or 2, wherein the medium to be separated (14) is passed successively to in each case the first side of two membranes (15, 17) with different separation properties, and wherein the second sides of the two membranes (15, 17) border a common space (13) filled with liquid carrier medium (19), and wherein the flow channels on in each case the first sides of the membranes (15, 17) have dimensions such that the average flow rate $v_1$ of the medium to be separated (14) on the first side of the first membrane (15) is < the flow rate $v_2$ of the medium to be separated (14) on the first side of the second membrane (17).

**4.** Device according to claim 3, **characterized in that** the membranes are hollow filament membranes (15, 17), **in that** the medium to be separated (14) is passed successively though the internal spaces (16, 18) of the hollow filament membranes (15, 17) of a first filter element (11) and then of a second filter element (12), which are both in the common closed space (13), and **in that** the first sides of the hollow filament membranes (15, 17) are formed by their inner surfaces (20, 23) and the second sides of the hollow filament membranes (15, 17) are formed by their outer surfaces (22, 24).

**5.** Device according to one of claims 3 or 4, **characterized in that** the average pore diameter of the first membrane (15) is ≥ the average pore diameter of the second membrane (17) of the second filter element (12).

**6.** Device according to one or more of claims 3 to 5, **characterized in that** the average pore diameter of the first membrane (15) is in the range from 0.05 to 1 μm.

**7.** Device according to claim 6, **characterized in that** the average pore diameter of the first membrane (15) is in the range from 0.1 to 1 μm.

**8.** Device according to one or more of claims 3 to 7, **characterized in that** the average pore diameter of the second membrane (17) is in the range from 0.005 to 0.5 μm.

**9.** Device according to claim 8, **characterized in that** the average pore diameter of the second membrane (17) is in the range from 0.01 to 0.1 μm.

**10.** Device according to one or more of claims 3 to 9, **characterized in that** the first membrane (15) has an asymmetric structure with a separation-active layer on the inner surface (20).

**11.** Device according to one or more of claims 3 to 10, **characterized in that** the second membrane (17) has an asymmetric structure with a separation-active layer on the outer surface (24).

**12.** Device according to one or more of claims 4 to 11, **characterized in that** the internal diameter (25) of the hollow filament membranes (15) of the first filter element (11) is in the range from 200 to 1,500 μm.

**13.** Device according to claim 12, **characterized in that** the internal diameter (25) of the first hollow filament membranes (15) is in the range from 300 to 600 μm.

**14.** Device according to one or more of claims 4 to 13, **characterized in that** the internal diameter (26) of the hollow filament membranes (17) of the second filter element (12) is in the range from 150 to 500 µm.

**15.** Device according to claim 14, **characterized in that** the internal diameter (26) of the second hollow filament membranes (17) is in the range from 220 to 300 µm.

**16.** Device according to one or more of claims 4 to 15, **characterized in that** the exchange area of the hollow filament membranes (15) of the first filter element (11) is in the range from 0.01 to 10 m$^2$.

**17.** Device according to claim 16, **characterized in that** the exchange area of the hollow filament membranes (15) of the first filter element (11) is in the range from 0.1 to 5 m$^2$.

**18.** Device according to one or more of claims 4 to 17, **characterized in that** the exchange-relevant length of the hollow filament membranes (15) of the first filter element (11) is in the range from 5 to 100 cm.

**19.** Device according to claim 16, **characterized in that** the exchange-relevant length of the hollow filament membranes (15) of the first filter element (11) is in the range from 10 to 30 cm.

**20.** Device according to one or more of claims 4 to 19, **characterized in that** the exchange area of the hollow filament membranes (17) of the second filter element (12) is in the range from 0.1 to 100 m$^2$.

**21.** Device according to claim 20, **characterized in that** the exchange area of the hollow filament membranes (17) of the second filter element (12) is in the range from 0.5 to 20 m$^2$.

**22.** Device according to one or more of claims 4 to 21, **characterized in that** the exchange-relevant length of the hollow filament membranes (17) of the second filter element (12) is in the range from 20 to 100 cm.

**23.** Device according to claim 22, **characterized in that** the exchange-relevant length of the hollow filament membranes (17) of the second filter element (12) is in the range from 20 to 50cm.

## Revendications

**1.** Procédé pour séparer des agents liquides, en particulier pour des applications médicales telles que la détoxication du sang, le milieu (14) à séparer étant conduit successivement sur le premier côté respectif de chacune de deux membranes (15, 17) séparant différemment, et les deuxièmes côtés des deux membranes (15, 17) délimitant un espace commun (13) et rempli d'agent porteur (19) liquide et l'espace commun (13) étant fermé pendant l'opération de séparation et **caractérisé en ce que** les canaux d'écoulement sur les premiers côtés respectifs des membranes (15, 17) sont dimensionnés de telle sorte que la vitesse moyenne d'écoulement $v_1$ de l'agent (14) à séparer sur le premier côté de la première membrane (15) est inférieure à la vitesse d'écoulement $v_2$ de l'agent (14) à séparer sur le premier côté de la deuxième membrane (17).

**2.** Procédé pour séparer des agents liquides, en particulier pour des applications médicales telles que la détoxication du sang, le milieu (14) à séparer étant conduit successivement sur le premier côté respectif de chacune de deux membranes (15, 17) séparant différemment, et les deuxièmes côtés des deux membranes (15, 17) délimitant un espace (13) commun et rempli d'agent porteur (19) liquide et l'espace (13) commun étant ouvert pendant l'opération de séparation et **caractérisé en ce que** les canaux d'écoulement sur les premiers côtés respectifs des membranes (15, 17) sont dimensionnés de telle sorte que la vitesse moyenne d'écoulement $v_1$ de l'agent (14) à séparer sur le premier côté de la première membrane (15) est inférieure à la vitesse d'écoulement $v_2$ de l'agent (14) à séparer sur le premier côté de la deuxième membrane (17).

**3.** Dispositif pour séparer des agents liquides, en particulier pour des applications médicales telles que la détoxication du sang, pour l'application du procédé selon la revendication 1 ou 2, l'agent (14) à séparer étant conduit successivement sur le premier côté respectif de chacune de deux membranes (15, 17) séparant différemment, et les deuxièmes côtés des deux membranes (15, 17) délimitant un espace (13) commun et rempli de l'agent porteur (19) liquide, et **caractérisé en ce que** les canaux d'écoulement sur les premiers côtés respectifs des membranes (15, 17) sont dimensionnés de telle sorte que la vitesse moyenne d'écoulement $v_1$ moyenne de l'agent (14) à séparer sur le premier côté de la première membrane (15) est inférieure à la vitesse d'écoulement $v_2$ de l'agent (14) à séparer sur le premier côté de la deuxième membrane (17).

**4.** Dispositif selon la revendication 3, **caractérisé en ce que** les membranes sont des membranes à fil creux (15, 17), **en ce que** l'agent (14) à séparer est conduit à travers successivement les espaces intérieurs (16, 18) des membranes à fil creux (15, 17) d'un premier élément filtrant (11) et ensuite d'un deuxième élément filtrant (12), qui se trouvent tous deux dans l'espace (13) fermé et commun, et **caractérisé en ce que** les premiers côtés des membranes à fil creux (15, 17) et les deuxièmes côtés des membranes à fil creux (15, 17) sont formés respectivement par leurs surfaces (20, 23) intérieures et leurs surfaces (22, 24) extérieures.

5. Dispositif selon l'une des revendications 3 et 4, **caractérisé en ce que** le diamètre extérieur des pores de la première membrane (15) est supérieur ou égal au diamètre moyen des pores de la deuxième membrane (17) du deuxième élément filtrant (12).

6. Dispositif selon l'une quelconque des revendications 3 à 5, **caractérisé en ce que** le diamètre moyen des pores de la première membrane (15) se situe dans la plage de 0,05 à 1 µm.

7. Dispositif selon la revendication 6, **caractérisé en ce que** le diamètre moyen des pores de la première membrane (15) se situe dans la plage de 0,1 à 1 µm.

8. Dispositif selon l'une quelconque ou plusieurs des revendications 3 à 7, **caractérisé en ce que** le diamètre moyen des pores de la deuxième membrane (17) se situe dans la plage de 0,005 à 0,5 µm.

9. Dispositif selon la revendication 8, **caractérisé en ce que** le diamètre moyen des pores de la deuxième membrane (17) se situe dans la plage de 0,01 à 0,1 µm.

10. Dispositif selon l'une quelconque ou plusieurs des revendications 3 à 9, **caractérisé en ce que** la première membrane présente une structure asymétrique avec une couche active au niveau de la séparation et située sur la surface (20) intérieure.

11. Dispositif selon l'une quelconque ou plusieurs des revendications 3 à 10, **caractérisé en ce que** la deuxième membrane présente une structure asymétrique avec une couche active au niveau de la séparation et située sur la surface (24) extérieure.

12. Dispositif selon l'une quelconque ou plusieurs des revendications 4 à 11, **caractérisé en ce que** le diamètre intérieur (25) des membranes à fil creux (15) du premier élément filtrant (11) se situe dans la plage de 200 à 1500 µm.

13. Dispositif selon la revendication 12, **caractérisé en ce que** le diamètre intérieur (25) des premières membranes à fil creux (15) se situe dans la plage de 300 à 600 µm.

14. Dispositif selon l'une quelconque ou plusieurs des revendications 4 à 13, **caractérisé en ce que** le diamètre intérieur (26) des membranes à fil creux (17) du deuxième élément filtrant (12) se situe dans la plage de 150 à 500 µm.

15. Dispositif selon la revendication 14, **caractérisé en ce que** le diamètre intérieur (26) des deuxièmes membranes à fil creux (17) se situe dans la plage de 220 à 300 µm.

16. Dispositif selon l'une quelconque ou plusieurs des revendications 4 à 15, **caractérisé en ce que** la surface d'échange des membranes à fil creux (15) du premier élément filtrant (11) se situe dans la plage de 0,01 à 10 m2.

17. Dispositif selon la revendication 16, **caractérisé en ce que** la surface d'échange des membranes à fil creux (15) du premier élément filtrant (11) se situe dans la plage de 0,1 à 5 m2.

18. Dispositif selon l'une quelconque ou plusieurs des revendications 4 à 17, **caractérisé en ce que** la longueur, importante au niveau de l'échange, des membranes à fil creux (15) du premier élément filtrant (11) se situe dans la plage de 5 à 100 cm.

19. Dispositif selon la revendication 16, **caractérisé en ce que** la longueur, importante au niveau de l'échange, des membranes à fil creux (15) du premier élément filtrant (11) se situe dans la plage de 10 à 30 cm.

20. Dispositif selon l'une quelconque ou plusieurs des revendications 4 à 19, **caractérisé en ce que** la surface d'échange des membranes à fil creux (17) du deuxième élément filtrant (12) se situe dans la plage de 0,1 à 100 m2.

21. Dispositif selon la revendication 20, **caractérisé en ce que** la surface d'échange des membranes à fil creux (17) du deuxième élément filtrant (12) se situe dans la plage de 0,5 à 20 m2.

22. Dispositif selon l'une quelconque ou plusieurs des revendications 4 à 21, **caractérisé en ce que** la longueur, importante au niveau de l'échange, des membranes à fil creux (17) du deuxième élément filtrant (12) se situe dans la plage de 20 à 100 cm.

23. Dispositif selon la revendication 22, **caractérisé en ce que** la longueur, importante au niveau de l'échange, des membranes à fil creux (17) du deuxième élément filtrant (12) se situe dans la plage de 20 à 50 cm.

Fig. 1

# Fig. 2